(19) Europäisches Patentamt
European Patent Office
Office européen des brevets

(11) **EP 0 505 153 B1**

(12) **EUROPEAN PATENT SPECIFICATION**

(45) Date of publication and mention
of the grant of the patent:
**23.07.1997 Bulletin 1997/30**

(51) Int Cl.⁶: **C08L 25/12**, C08L 51/04,
C08L 55/02

(21) Application number: **92302303.0**

(22) Date of filing: **18.03.1992**

(54) **Rubber-reinforced styrene resin composition and process for producing the same**

Gummiverstärkte Styrolharzzusammensetzung und Verfahren zu deren Herstellung

Composition de résine styrénique renforcée de caoutchouc et procédé pour la fabriquer

(84) Designated Contracting States:
**DE NL**

(30) Priority: **18.03.1991 JP 77247/91**

(43) Date of publication of application:
**23.09.1992 Bulletin 1992/39**

(73) Proprietor: **JAPAN SYNTHETIC RUBBER CO., LTD.**
**Tokyo 104 (JP)**

(72) Inventors:
• **Noro, Masahiko**
**Yokkaichi-shi (JP)**
• **Ijuin, Noriaki**
**Yokkaichi-shi (JP)**
• **Matsuda, Akio**
**Yokkaichi-shi (JP)**
• **Furuyama, Tateki**
**Yokkaichi-shi (JP)**

(74) Representative: **Clifford, Frederick Alan et al**
**MARKS & CLERK,**
**57/60 Lincoln's Inn Fields**
**London WC2A 3LS (GB)**

(56) References cited:
**EP-A- 0 048 059**    **EP-A- 0 074 051**
**EP-A- 0 154 244**    **EP-A- 0 186 785**

• **WORLD PATENTS INDEX LATEST Week 8910, Derwent Publications Ltd., London, GB; AN 89-073440**

**Description**

The present invention relates to a rubber-reinforced styrene resin composition having excellent heat resistance, impact resistance and processability, as well as to a process for producing the composition.

Rubber-reinforced thermoplastic resins have excellent impact resistance, processability and surface gloss and are, therefore, used in various applications. However, when they are used as shaped articles such as interior trims of vehicles, the articles are required to have mat surface. Further, some other uses require that the said resins have heat resistance. The conventional methods of delustering shaped articles include a method in which an oxide of magnesium, calcium or the like is added. This method, however, has a drawback that the impact strength is greatly reduced and the gloss is not uniformly taken off. There is also a delustering method in which a rubbery elastomer is added. This method, however, brings about deterioration of mechanical properties (in particular, hardness and rigidity) of resin.

There is further known a delustering method in which a resin component three-dimensionally cross-linked with a crosslinking monomer is added. This method, however, is unable to give a uniformly delustered molded article and moreover reduces the processability of the resin.

EP-A-0074051 discloses an impact resistant composition having a good colour tone comprising a butadiene-based graft product an acrylate-butadiene copolymer and a matrix.

EP-A-0186785 discloses an impact resistant polymeric composition comprising a rigid polymeric matrix having disposed therein two grafted rubbery copolymers. It is intended to achieve a high degree of gloss.

Meanwhile, for the purpose of improving heat resistance, it is known to use a-methylstyrene as a comonomer or to add a maleimide copolymer. This approach, however, brings about a great reduction in processability and impact resistance.

The present invention has solved the above-mentioned problems of the prior art by providing a rubber-reinforced styrene resin composition having an excellent wetting effect and a good balance of heat resistance, processability and impact resistance.

According to the present invention, there are provided a rubber-reinforced styrene resin composition consisting essentially of

(1) 2-30% by weight of a grafted rubbery polymer wherein 100 parts by weight of a rubbery polymer (I) is grafted with from 3 to 22 parts by weight of a polymer (namely, the grafting degree being less than 30% by weight) of a monomer component (A) consisting of (a) 10-95% by weight of at least one aromatic alkenyl compound, (b) 1-60% by weight of at least one alkenyl cyanide compound and (c) 0-89% by weight of at least one other copolymerizable monomer [(a) + (b) + (c) = 100% by weight],

(2) 5-40% by weight of a grafted rubbery polymer wherein 100 parts by weight of a rubbery polymer (II) is grafted with 30 parts by weight or more of a polymer (namely, the grafting degree being at least 30% by weight) of a monomer component (A') consisting of (a') 10-95% by weight of at least one aromatic alkenyl compound, (b') 1-60% by weight of at least one alkenyl cyanide compound and (c') 0-89% by weight of at least one other copolymerizable monomer [(a') + (b') + (c') = 100% by weight], and

(3) 40-93% by weight of a styrene copolymer of a monomer component (A") consisting of (a") 10-95% by weight of at least one aromatic alkenyl compound, (b") 1-60% by weight of at least one alkenyl cyanide compound and (c") 0-89% by weight of at least one other copolymerizable monomer [(a") + (b") + (c") = 100% by weight] [(1) + (2) + (3) = 100% by weight]; and a process for producing such a rubber-reinforced styrene resin composition.

The rubbery polymers (I) and (II) used in the rubber-reinforced styrene resin composition of the present invention may be the same or different, but are preferably the same. The rubbery polymers (I) and (II) include, for example, diene rubbery polymers such as polybutadiene, polyisoprene, styrene-butadiene random copolymer, acrylonitrile-butadiene copolymer and styrene-butadiene block copolymer; hydrogenation products of said diene rubbery polymers; ethylene-propylene-(diene) rubbers; and acrylic rubbers. Of these, preferable are polybutadiene, styrene-butadiene copolymer, a hydrogenation product of polybutadiene, a hydrogenation product of styrene-butadiene block copolymer and an ethylene-propylene-(diene) rubber. The rubbery polymers mentioned above can be used alone or in combination of two or more as the rubbery polymers (I) or (II).

The aromatic alkenyl compounds which are the components (a), (a') and (a") in the monomer components (A), (A') and (A"), respectively, include styrene, t-butylstyrene, α-methylstyrene, p-methylstyrene, divinylbenzene, 1,1-diphenylstyrene, N,N-diethyl-p-methylstyrene, N,N-diethyl-p-aminoethylstyrene, vinylpyridine, vinylxylene, monochlorostyrene, dichlorostyrene, monobromostyrene, fluorostyrene, ethylstyrene, and vinylnaphthalene. Styrene and α-methylstyrene are particularly preferable. These aromatic alkenyl compounds can be used alone or in combination of two or more.

The alkenyl cyanide compounds which are the components (b), (b') and (b") in the monomer components (A), (A') and (A"), respectively, include acrylonitrile, and methacrylonitrile. Of these, acrylonitrile is particularly preferable. These alkenyl cyanide compounds can be used alone or in combination of two or more.

The other copolymerizable monomers which are the components (c), (c') and (c") in the monomer components (A), (A') and (A"), respectively, include acrylic acid esters such as methyl acrylate, ethyl acrylate, propyl acrylate, butyl acrylate, amyl acrylate, hexyl acrylate, octyl acrylate, 2-ethylhexyl acrylate, cyclohexyl acrylate, dodecyl acrylate, octadecyl acrylate, phenyl acrylate and benzyl acrylate; methacrylic acid esters such as methyl methacrylate, ethyl methacrylate, propyl methacrylate, butyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate and benzyl methacrylate; unsaturated dicarboxylic acid anhydrides such as maleic anhydride, itaconic anhydride and citraconic anhydride, unsaturated monocarboxylic acids such as acrylic acid, methacrylic acid and the like, maleimide compounds such as maleimide, N-methylmaleimide, N-butylmaleimide, N-(p-methylphenyl)maleimide, N-phenylmaleimide and N-cyclohexylmaleimide, epoxy compounds such as glycidyl methacrylate. Incidentally, the maleimide compounds include those obtained by copolymerizing styrene with, for example, maleic anhydride and imidizing the resulting copolymer with aniline. These copolymerizable monomers can be used alone or in combination of two or more as components (c), (c') and (c"). Of these copolymerizable monomers, preferable are methyl methacrylate and maleimide compounds. In particular, the use of a maleimide compound is preferable because it gives a rubber-reinforced styrene resin composition well balanced in physical properties in respect of heat resistance and moldability.

The respective proportions of the aromatic alkenyl compounds (a), (a') and (a") in the monomer components (A), (A') and (A") used in the components (1) to (3) are 10-95% by weight, preferably 20-90% by weight. When the proportions are less than 10% by weight, the moldability of the resulting resin composition is inferior. When the proportions are more than 95% by weight, the heat resistance, chemical resistance and impact resistance of the resulting resin composition are inferior.

The respective proportions of the vinyl cyanide compounds (b), (b') and (b") in the monomer components (A), (A') and (A") used in the components (1) to (3) are 1-60% by weight, preferably 5-55% by weight. When the proportions are less than 1% by weight, the chemical resistance of the resulting resin composition is inferior. When the proportions are more than 60% by weight, the moldability and heat stability during molding, of the resulting resin composition are inferior.

The respective proportions of the other copolymerizable monomers (c), (c') and (c") in the monomer components (A), (A') and (A") used in the components (1) to (3) are 0-89% by weight, preferably 0-75% by weight. When the proportions are more than 89% by weight, the moldability, impact resistance and chemical resistance of the resulting resin composition are inferior.

The component (1) is a grafted rubbery polymer wherein the monomers (a), (b) and (c) are graft-polymerized directly onto the rubbery polymer (I). The grafting degree of this grafted rubbery polymer (i.e. the proportion of the graft-polymerized monomers to the rubbery polymer) is less than 22% by weight, preferably 5-22 % by weight. When the grafting degree is more than 30% by weight, no matting effect as desired is obtained.

The component (2) is a grafted rubbery polymer wherein the monomers (a'), (b') and (c') are graft-polymerized directly onto the rubbery polymer (II). The grafting degree of this grafted rubbery polymer is 30% by weight or more, preferably 35-250% by weight, more preferably 40-120% by weight. When the grafting degree is less than 30% by weight, impact resistance is unsatisfactory.

The component (3) is a styrene polymer other than the above-mentioned grafted rubbery polymers (1) and (2), and is composed of copolymers (free from rubbery polymer) obtained as by-products in the production of the components (1) and (2) and/or polymers produced separately.

The difference between the grafting degree of the component (1) and the grafting degree of the component (2) is preferably 5% by weight or more, more preferably 15% by weight or more, particularly preferably 20% by weight or more.

When the difference between the grafting degree of the component (1) and the grafting degree of the component (2) falls within the above range, the resulting resin composition has an excellent matting effect and a good physical property balance in respect of impact resistance, chemical resistance, heat stability and moldability.

The proportion of the component (1) in the rubber-reinforced styrene resin composition of the present invention is 2-30% by weight, preferably 3-25% by weight, more preferably 5-23% by weight, particularly preferably 8-21% by weight. When the proportion of the component (1) is less than 2% by weight, no sufficient matting effect is obtained. When the proportion is more than 30% by weight, the moldability is unsatisfactory.

The proportion of the component (2) in the rubber-reinforced styrene resin composition of the present invention is 5-40% by weight, preferably 7-35% by weight, more preferably 8-30% by weight, particularly preferably 10-25% by weight. When the proportion of the component (2) is less than 5% by weight, no sufficient impact resistance is obtained. When the proportion is more than 40% by weight, the moldability is unsatisfactory.

The proportion of the component (3) in the rubber-reinforced styrene resin composition of the present invention is 40-93% by weight, preferably 50-90% by weight and more preferably 50-82 % by weight. When the proportion of the component (3) is less than 40% by weight, the moldability is unsatisfactory. When the proportion is more than 93% by weight, the impact resistance is unsatisfactory.

The rubber-reinforced styrene resin composition of the present invention contains the components (1) to (3) as essential components. The present resin composition has a better physical property balance in respect of heat resistance, moldability and impact resistance (such a resin composition is referred to hereinafter as "preferable rubber-reinforced styrene resin" in some cases) when the component (3), i.e. the styrene polymer, is a copolymer of a monomer component (A") consisting of (a") 10-95% by weight, preferably 20-90% by weight of at least one aromatic alkenyl compound, (b") 1-60% by weight, preferably 5-55% by weight of at least one alkenyl cyanide compound, (c"-1) 0.5-50% by weight, preferably 1-40% by weight of at least one maleimide compound and (c"-2) 0-88.5% by weight, preferably 0-74.5% by weight of at least one other copolymerizable monomer [(a") + (b") + (c"-1) + (c"-2) = 100% by weight]. The maleimide compount (c"-1) may also be the maleimide component in a copolymer obtained by copolymerizing maleic anhydride with a copolymerizable monomer such as styrene and imidizing the copolymer obtained with aniline.

The rubber-reinforced styrene resin composition of the present invention consisting essentially of the components (1) to (3) can be produced by, for example, the typical production process mentioned below. The composition can be produced by compounding the following components (1') and (2'), the following components (1') to (3') or the following components (1') to (4'). The components (1') to (4') are compounded in such proportions that the grafting degrees, rubbery polymer contents, monomer compositions and compounding proportions of the components (1) to (3) fall within the respective ranges specified.

The rubber-reinforced styrene resin composition of the present invention is typically produced by a process comprising compounding

(1') 5-40% by weight, preferably 7-35% by weight, of a graft copolymer obtained by graft-polymerizing, in the presence of 5-80 parts by weight, preferably 10-65 parts by weight, of a rubbery polymer (I), 95-20 parts by weight, preferably 90-35 parts by weight, of a monomer component (A) consisting of (a) 10-95% by weight, preferably 20-80% by weight, of at least one aromatic alkenyl compound, (b) 1-60% by weight, preferably 5-50% by weight, of at least one alkenyl cyanide compound and (c) 0-89% by weight, preferably 0-75% by weight, of at least one other copolymerizable monomer [(a) + (b) + (c) = 100% by weight] [(I) + (A) = 100 parts by weight], the grafting degree of the grafted rubbery polymer contained in the graft copolymer being 3-22 % by weight,

(2') 5-80% by weight, preferably 10-70% by weight, of a graft copolymer obtained by graft-polymerizing, in the presence of 5-80 parts by weight, preferably 10-65 parts by weight, of a rubbery polymer (II), 95-20 parts by weight, preferably 90-35 parts by weight, of the monomer component (A') consisting of (a') 10-95% by weight, preferably 20-80% by weight, of at least one aromatic alkenyl compound, (b') 1-60% by weight, preferably 5-50% by weight, of at least one alkenyl cyanide compound and (c') 0-89% by weight, preferably 0-75% by weight, of at least one other copolymerizable monomer [(a') + (b') + (c') = 100% by weight] [(II) + (A) = 100 parts by weight], the grafting degree of the grafted rubbery polymer contained in the graft copolymer being 30% by weight or more,

(3') 0-60% by weight, preferably 5-55% by weight, more preferably 10-50% by weight, of a styrene polymer obtained by copolymerizing a monomer component (A") consisting of (a") 10-95% by weight, preferably 20-80% by weight, of at least one aromatic alkenyl compound, (b") 0-60% by weight, preferably 1-50% by weight, of at least one alkenyl cyanide compound, (c"-1) 0.5-80% by weight, preferably 10-70% by weight, more preferably 15-60% by weight of at least one maleimide compound and (c"-2) 0-80% by weight, preferably 0-75% by weight, of at least one other copolymerizable monomer [(a") + (b") + (c"-1) + (c"-2) = 100% by weight], and

(4') 0-60% by weight, preferably 0-50% by weight, of a styrene polymer obtained by copolymerizing a monomer component (A''') consisting of (a''') 10-95% by weight, preferably 20-80% by weight, of at least one aromatic alkenyl compound, (b''') 1-60% by weight, preferably 5-50% by weight, of at least one alkenyl cyanide compound and (c''') 0-89% by weight, preferably 0-75% by weight, of at least one other copolymerizable monomer [(a''') + (b''') + (c''') = 100% by weight] [(1') + (2') + (3') + (4') = 100% by weight].

The grafting degree and the content of grafted rubbery polymer in the graft copolymer are values obtained in the following manner:

One part by weight of a graft copolymer was placed in 20 parts by weight of acetone; the mixture was stirred at 25°C for 48 hours and then separated into an insoluble portion (dry weight = W) and a soluble portion (dry weight = X) using a centrifuge. Using the data obtained, the grafting degree and the grafted rubbery polymer content were determined from the following equations:

$$\text{Grafting degree (\% by weight)} = [(W - R)/R] \times 100$$

(R is a weight of a rubbery polymer before being subjected to grafting [i.e. rubbery polymer (I) or (II)], calculated from polymerization recipe for graft copolymer.)

Content of grafted rubbery polymer (% by weight) = [W/(W + X)] x 100

(The grafted rubbery polymer refers to the above insoluble portion.)

In the process of the present invention, the rubbery polymers (I) and (II) used in the components (1') and (2') may be respectively the same as the rubbery polymers (I) and (II) in the components (1) and (2).

Also, the monomers constituting the monomer components (A) to (A''') used in the components (1') to (4') may be the same as the monomers in the components (1) to (3). The monomer components (A) to (A''') of the components (1') to (4') may be different from one another in respect of monomer type and proportion; but the monomer components of the components (1'), (2') and (4') and/or the components (2') and (4') are preferably the same as or similar to one another in respect of monomer type and proportion and, in particular, the monomer components of the components (1') and (2') are preferably the same as or similar to each other in respect of monomer type and proportion.

The component (3) (styrene polymer) used in the preferable rubber-reinforced styrene resin and the components (3') and (4') (styrene polymers) desirably have a molecular weight distribution (the ratio of weight-average molecular weight/number-average molecular weight determined from the calibration curve of standard polystyrene obtained by a gel permeation chromatography) of preferably 3.5 or less, more preferably 3.2-1.1 and a number-average molecular weight of preferably $3 \times 10^4$ to $15 \times 10^{14}$, more preferably $5 \times 10^4$ to $12 \times 10^4$, because the resulting resin composition has an excellent physical property balance in respect of impact resistance and moldability.

The number average molecular weights of the maleimide copolymers used as the component (3) or the component (3') are preferably $3 \times 10^4$ to $15 \times 10^4$, more preferably $5 \times 10^4$ to $10 \times 10^4$.

The intrinsic viscosity $[\eta]$ of the methyl ethyl ketone-soluble portion of each of the components (3), (1') and (2') is preferably 0.2 to 0.8 dl/g, more preferably 0.2 to 0.6 dl/g.

When these conditions are met, the physical balance in respect of imacpt resistance and moldability becomes better.

The rubber-reinforced styrene resin composition of the present invention can be subjected to injection molding, extrusion molding, vacuum forming, profile molding, expansion molding, etc. to obtain automobile parts, electrical parts, household goods, various parts for industrial use, etc. In the above molding, it is possible to add conventional additives such as anti-oxidant, ultraviolet absorber, lubricant, flame retardant, antistatic agent, foaming agent, glass fiber, and other polymers such as polyamide, polycarbonate, thermoplastic polyester, polyphenylene ether, poly-vinylidene fluoride resin, diene rubber, ethylene-propylene rubber and acrylic rubber.

The present invention is more specifically explained below referring to Examples.

In the Examples, parts and % are by weight unless otherwise specified.

In the Examples, measurements of properties were effected as follows.

Izod impact strength

Measured in accordance with ASTM D 256 (6 mm thickness, notched). The unit is kgf/cm$^2$.

Melt flow rate

Measured in accordance with ASTM D 1238 (220°C, 10 kg). The unit is g/10 min.

Heat deformation temperature

Measured in accordance with ASTM D 648 (12 mm thickness, 18.6 kgf/cm). The unit is °C.

Surface gloss (gloss value)

Measured using a gloss meter (incident light = 60°C, reflected light = 60°). The unit is %.

Reference Example 1 [Preparation of rubber-reinforced resin (1)]

Mixture (I) recipe

| | | |
|---|---|---|
| **Polybutadiene latex (solid content)** | **60** | **parts** |
| **Styrene** | **11** | **"** |
| **Acrylonitrile** | **2** | **"** |
| **t-Dodecyl mercaptan** | **0.3** | **"** |
| **Potassium rosinate** | **0.25** | **"** |
| **Potassium hydroxide** | **0.005** | **"** |
| **Deionized water** | **100** | |

The above mixture (I) was fed to a reactor provided with a jacket and a stirrer. The air inside the reactor was replaced with a nitrogen gas. The temperature of the contents of the reactor was elevated to 50°C while the jacket temperature was kept at 70°C. Thereto were added a solution of 0.3 part of sodium diaminetetraacetate dihydrate, 0.35 part of sodium sulfoxylate formaldehyde dihydrate and 0.01 part of ferrous sulfate in 10 parts of water and 0.1 part of cumene hydroperoxide. The resulting mixture was subjected to reaction.

After one hour from the start of the reaction, the following mixture (II) was added continuously in 2 hours, during which the reaction was continued.

Mixture (II) recipe

| | |
|---|---|
| Styrene | 19 parts |
| Acrylonitrile | 8 " |
| t-Dodecyl mercaptan | 0.5 " |
| Potassium rosinate | 1.0 " |
| Potassium hydroxide | 0.02 " |
| Cumene hydroperoxide | 0.15 " |
| Deionized water | 50 " |

By the above polymerization was obtained a rubber-reinforced resin (a graft copolymer, the term "rubber-reinforced resin" is hereinafter used in the same meaning) [referred to hereinafter as the rubber reinforced resin (1)], as the component (1').

Constitution of 100 parts of the rubber-reinforced resin (1):

| | |
|---|---|
| Component (1) [rubbery polymer (I), grafting degree = 13%] | 67.8 parts |
| Component (3) (styrene-acrylonitrile copolymer) | 32.2 " |

Reference Example 2 [Preparation of rubber-reinforced resin (2)]

In the presence of 55 parts of a polybutadiene, 30 parts of styrene and 15 parts of acrylonitrile were graft-polymerized in the same manner as in the production of the rubber-reinforced resin (1), to obtain a rubber-reinforced resin [referred to hereinafter as the rubber-reinforced resin (2)] as the component (2').

Constitution of 100 parts of the rubber-reinforced resin (2):

| | |
|---|---|
| Component (1) [rubbery polymer (I), grafting degree = 22%] | 67.1 parts |
| Component (3) (styrene-acrylonitrile copolymer) | 32.9 " |

Reference Example 3 [Preparation of rubber-reinforced resin (3)]

Mixture (I) recipe

| | | |
|---|---|---|
| **Polybutadiene latex (solid content)** | **40** | **parts** |
| **Styrene** | **14** | **"** |
| **Acrylonitrile** | **4** | **"** |
| **t-Dodecyl mercaptan** | **0.1** | **"** |
| **Potassium rosinate** | **0.25** | **"** |
| **Potassium hydroxide** | **0.005** | **"** |
| **Deionized water** | **100** | **"** |

The above mixture (I) was fed to a reactor provided with a jacket and a stirrer. The air inside the reactor was replaced with a nitrogen gas. The temperature of the contents inside the reactor was elevated to 50°C while the jacket temperature was kept at 70°C. Thereto were added a solution of 0.3 part of sodium pyrophosphate, 0.35 part of dextrose and 0.01 part of ferrous sulfate in 10 parts of water and 0.1 part of cumene hydroperoxide. The resulting mixture was subjected to reaction.

After one hour from the start of the reaction, the following mixture (II) was added continuously in 5 hours, after which the reaction was continued for 1 hour with stirring.

Mixture (II) recipe

| | |
|---|---|
| Styrene | 28 parts |
| Acrylonitrile | 12 " |
| t-Dodecyl mercaptan | 0.2 " |
| Potassium rosinate | 1.0 " |
| Potassium hydroxide | 0.02 " |
| Cumene hydroperoxide | 0.15 " |
| Deionized water | 50 " |

By the above polymerization was obtained a rubber-reinforced resin [referred to hereinafter as the rubber-reinforced resin (3)] as the component (2').

Constitution of 100 parts of the rubber-reinforced resin (3):

| | |
|---|---|
| Component (2) [rubbery polymer (II), grafting degree = 43%] | 57.2 parts |
| Component (3) (styrene-acrylonitrile copolymer) | 42.8 " |

Reference Example 4 [Preparation of rubber-reinforced resin (4)]

In the presence of 40 parts of a polybutadiene, 45 parts of styrene and 15 parts of acrylonitrile were graft-polymerized in the same manner as in the production of the rubber-reinforced resin (3), to obtain a rubber-reinforced resin [referred to hereinafter as the rubber-reinforced resin (4)] as the component (2').

Constitution of 100 parts of the rubber-reinforced resin (4):

| Component (2) [rubbery polymer (II), grafting degree = 75%] | 70.0 parts |
|---|---|
| Component (3) (styrene-acrylonitrile copolymer) | 30.0 " |

Reference Example 5 [Preparation of Copolymer (1)]

Into a reactor provided with a jacket and a stirrer were charged 50 parts of toluene, 70 parts of styrene, 30 parts of acrylonitrile and 0.1 part of t-dedecylmercaptan, and the air inside the reactor was replaced with a nitrogen gas, after which the internal temperature was elevated to 140°C, at which temperature the mixture was subjected to reaction for 4 hours. The toluene and unreacted monomers were removed by steam stripping to recover a copolymer (a styrene copolymer) (hereinafter, the term "copolymer" is used in the same meaning) as the component (4').

Molecular weight distribution = 3.1

Number-average molecular weight = $8.5 \times 10^4$

Reference Example 6 [Preparation of copolymer (2)]

Into a reactor provided with a jacket and a stirrer were charged 100 parts of a toluene/methyl ethyl ketone (50%/50%) mixture, 50 parts of styrene, 50 parts of N-phenylmaleimide, 0.1 part of benzoyl peroxide and 0.1 part of t-dodecylmercaptan, and the air inside the reactor was replaced with a nitrogen gas, after which the internal temperature was elevated to 85°C, at which temperature the mixture was subjected to reaction for 3 hours. The toluene and unreacted monomers were removed by steam stripping to recover a copolymer as the component (3').

Molecular weight distribution = 2.9

Number-average molecular weight = $6.8 \times 10^4$

Reference Example 7 [Preparation of copolymer (3)]

The same procedure as in Reference Example 6 was repeated, except that 40 parts of styrene, 50 parts of N-phenylmaleimide and 10 parts of acrylonitrile were substituted for the 50 parts of styrene and 50 parts of N-phenylmaleimide and the t-dodecylmercaptan was not used, to obtain a copolymer as the component (3').

Molecular weight distribution = 2.7

Number-average molecular weight = $8.2 \times 10^4$

Examples 1-9 and Comparative Examples 1-8

The rubber-reinforced resins and copolymers prepared in the Reference Examples were mixed using a Henschel mixer, according to the compounding recipes shown in Tables 1 and 2. Each of the resulting mixtures was melt-mixed at a resin temperature of 230-250°C using a vented extruder and extruded therethrough to prepare pellets. The pellets were dried at 90°C. The dried pellets were subjected to injection molding at 230°C and each molded article was measured for physical properties.

The results obtained are shown in Tables 1 and 2.

Table 1

| | Example | | | | | | | | |
|---|---|---|---|---|---|---|---|---|---|
| | 1 | 2 | 3 | 4 | 5 | 6 | 7 | 8 | 9 |
| <u>Compounding recipe (parts)</u> | | | | | | | | | |
| Rubber-reinforced resin (1) (grafting degree = 13%) [Component (1) 6.78% + component (3) 32.2%] | 20 | – | 30 | – | – | – | – | 35 | – |
| Rubber-reinforced resin (2) (grafting degree = 22%) [Component (1) 67.1% + component (3) 32.9% | – | 20 | – | 15 | 10 | 40 | 5 | – | 30 |
| Rubber-reinforced resin (3) (grafting degree = 43%) [Component (2) 57.2% + component (3) 42.8%] | 30 | – | – | 20 | – | – | 40 | – | 40 |
| Rubber-reinforced resin (4) (grafting degree = 75%) [Component (2) 70.0% + component (3) 30.0%] | – | 30 | 30 | 25 | 55 | 43 | – | 10 | – |
| Copolymer (1) [Component (4') 100%] | 30 | 20 | 20 | – | 15 | – | 45 | 35 | 30 |
| Copolymer (2) [Component (3') 100%] | 20 | – | – | 40 | 20 | 17 | 10 | – | – |
| Copolymer (3) [Component (3') 100%] | – | 30 | 20 | – | – | – | – | 20 | – |

– to be cont'd –

EP 0 505 153 B1

Table 1 (cont'd)

| Composition of rubber-reinforced styrene resin (Product) (Parts) | | | | | | | | | |
|---|---|---|---|---|---|---|---|---|---|
| Component (1) | 13.6 | 13.4 | 20.3 | 10.1 | 6.7 | 26.8 | 3.4 | 23.7 | 20.1 |
| Component (2) | 17.2 | 21.0 | 21.0 | 28.9 | 38.5 | 30.1 | 22.9 | 7.0 | 22.9 |
| Component (3) | 69.2 | 65.6 | 58.7 | 61.0 | 54.8 | 43.1 | 73.7 | 69.3 | 57.0 |
| **Physical Properties** | | | | | | | | | |
| Izod impact strength | 23 | 18 | 20 | 16 | 38 | 33 | 17 | 15 | 25 |
| Melt flow rate | 11 | 9 | 14 | 8 | 5 | 6 | 18 | 16 | 19 |
| Heat deformation temperature | 106 | 112 | 107 | 118 | 101 | 100 | 97 | 108 | 91 |
| Surface gloss value | 38 | 41 | 35 | 44 | 48 | 29 | 58 | 33 | 37 |

EP 0 505 153 B1

Table 2

| | Comparative Example | | | | | | | |
|---|---|---|---|---|---|---|---|---|
| | 1 | 2 | 3 | 4 | 5 | 6 | 7 | 8 |
| **Compounding recipe (Parts)** | | | | | | | | |
| Rubber-reinforced resin (1)** | 1.5 | 30 | 50 | 1.5 | 10 | 10 | - | - |
| Rubber-reinforced resin (2)** | - | - | - | - | - | - | - | - |
| Polybutadiene latex (Non-grafted rubber, solid content) | - | - | - | - | - | - | 20 | - |
| Rubber-reinforced resin (3)** | 30 | 5 | 10 | 5 | - | - | - | 40 |
| Rubber-reinforced resin (4)** | - | - | - | - | 70 | 90 | 30 | - |
| Copolymer (1) [Component (4') 100%] | 48.5 | 45 | 20 | 67 | 20 | - | 30 | 30 |
| Copolymer (2) [Component (3') 100%] | 20 | 20 | 20 | 20 | - | - | - | - |
| Copolymer (3) [Component (3') 100%] | - | - | - | - | - | - | 30 | 30 |
| **Composition of rubber-reinforced styrene resin (Product) (parts)** | | | | | | | | |
| Component (1) | 1.0 | 20.3 | 33.9 | 1.0 | 6.8 | 6.8 | (20) | 0 |
| Component (2) | 17.2 | 2.9 | 5.7 | 2.9 | 49.0 | 63.0 | 21 | 22.9 |
| Component (3) | 81.8 | 76.8 | 60.4 | 96.1 | 44.2 | 30.2 | 59 | 77.1 |

- to be cont'd -

EP 0 505 153 B1

Table 2 (cont'd)

| Properties | | | | | | | | |
|---|---|---|---|---|---|---|---|---|
| Izod impact strength | 14 | 7 | 19 | 5 | 43 | 49 | 11 | 15 |
| Melt flow rate | 16 | 19 | 2 | 30 | 0.3 | * | 16 | 10 |
| Heat deformation temperature | 107 | 106 | 105 | 109 | 80 | 78 | 106 | 113 |
| Surface gloss value | 82 | 33 | 31 | 84 | 53 | 48 | 32 | 88 |

Note: * means "impossible to measure".

**: The same as in Table 1.

As is clear from Table 1, the rubber-reinforced styrene resins of Examples 1 to 9 according to the present invention

EP 0 505 153 B1

are good in matting effect and excellent in heat resistance, moldability and impact strength.

Meanwhile, as is clear from Table 2, the rubber-reinforced styrene resins of Comparative Examples 1 and 8 contain the component (1) in an amount smaller than the range specified in the present invention, and are strikingly inferior in matting effect. The rubber-reinforced styrene resin of Comparative Example 2 contains the component (2) in an amount smaller than the range specified in the present invention and is inferior in impact resistance. The rubber-reinforced styrene resin of Comparative Example 3 contains the component (1) in an amount larger than the range specified in the present invention and is inferior in moldability. The rubber-reinforced styrene resin of Comparative Example 4 contains the component (3) in an amount larger than the range specified in the present invention and is inferior in impact resistance and matting effect. The rubber-reinforced styrene resin of Comparative Example 5 contains the component (2) in an amount larger than the range specified in the present invention and is inferior in moldability. The rubber-reinforced styrene resin of Comparative Example 6 contains the component (3) in an amount larger than the range specified in the present invention and is inferior in moldability. In the resin of Comparative Example 7, the component (1) in the rubber-reinforced styrene resin of the present invention is replaced with a polybutadiene latex (a non-grafted rubber), and the resin of Comparative Example 7 is inferior in Izod impact strength.

Conventional rubber-reinforced styrene resins have had the problems that the surface gloss is not uniformly taken off and the physical property balance in respect of impact resistance, moldability and heat resistance is inferior. Meanwhile, in the rubber-reinforced styrene resin composition of the present invention, the surface gloss is uniformly taken off and the physical property balance in respect of impact resistance, moldability and heat resistance is excellent, and therefore, the resin composition has a high industrial value.

**Claims**

1. A rubber-reinforced styrene resin composition consisting essentially of:

   (1) 2-30% by weight of a grafted rubbery polymer wherein 100 parts by weight of a rubbery polymer (I) is grafted with from 3 to 22 parts by weight of a polymer of a monomer component (A) consisting of (a) 10-95% by weight of at least one aromatic alkenyl compound, (b) 1-60% by weight of at least one alkenyl cyanide compound and (c) 0-89% by weight of at least one other copolymerizable monomer, in which (a) + (b) + (c) = 100% by weight,
   (2) 5-40% by weight of a grafted rubbery polymer wherein 100 parts by weight of a rubbery polymer (II) is grafted with 30 parts by weight or more of a polymer of a monomer component (A') consisting of (a') 10-95% by weight of at least one aromatic alkenyl compound, (b') 1-60% by weight of at least one alkenyl cyanide compound and (c') 0-89% by weight of at least one other copolymerizable monomer, in which (a') + (b') + (c') = 100% by weight, and
   (3) 40-93% by weight of a styrene copolymer of a monomer component (A") consisting of (a") 10-95% by weight of at least one aromatic alkenyl compound, (b") 1-60% by weight of at least one alkenyl cyanide compound and (c") 0-89% by weight of at least one other copolymerizable monomer, in which (a") + (b") + (c") = 100% by weight,

   wherein (1) + (2) + (3) = 100% by weight.

2. The rubber-reinforced styrene resin composition according to Claim 1, wherein the ratio of the component (1)/the component (2)/the component (3) is 3-25/7-35/50-90% by weight.

3. The rubber-reinforced styrene resin composition according to Claim 1, wherein the ratio of the component (1)/the component (2)/the component (3) is 8-21/10-25/50-82% by weight.

4. The rubber-reinforced styrene resin composition according to Claim 1, wherein the grafting degree of the component (1) is 3-22 % by weight and the grafting degree of the component (2) is 35-250% by weight.

5. The rubber-reinforced styrene resin composition according to Claim 1, wherein the grafting degree of the component (1) is 5-22% by weight and the grafting degree of the component (2) is 40-120% by weight.

6. The rubber-reinforced styrene resin composition according to Claim 1, wherein the difference between the grafting degree of the component (1) and the grafting degree of the component (2) is more than 5% by weight.

7. The rubber-reinforced styrene resin composition according to Claim 1, wherein the difference between the grafting degree of the component (1) and the grafting degree of the component (2) is 20% by weight or more.

8. The rubber-reinforced styrene resin composition according to Claim 1, wherein the ratio of the component (a)/the component (b)/the component (c) in the monomer component (A), the ratio of the component (a')/the component (b')/the component (c') in the monomer component (A') and the ratio of the component (a")/the component (b")/ the component (c") in the monomer component (A") are each 20-90/5-55/0-75% by weight.

9. The rubber-reinforced styrene composition according to Claim 1, wherein the component (3) is a styrene copolymer of a monomer component (A") consisting of (a") at least one aromatic alkenyl compound, (b") at least one alkenyl cyanide compound, (c"-1) at least one maleimide compound and (c"-2) at least one other copolymerizable monomer, and the ratio of the component (a")/the component (b")/the component (c"-1)/the component (c"-2) in the component (3) is 10-95/1-60/0.5-50/0-88.5% by weight.

10. The rubber-reinforced styrene resin composition according to Claim 9, wherein the ratio of the component (a")/the component (b")/the component (c"-1)/the component (c"-2) in the component (3) is 20-90/5-55/1-40/0-74.5% by weight.

11. The rubber-reinforced styrene resin composition according to Claim 1, wherein the molecular weight distribution Mw/Mn of the component (3) is 1.1-3.2.

12. The rubber-reinforced styrene resin composition according to Claim 1, wherein the weight-average molecular weight (polystyrene-reduced Mw) of the component (3) is $3 \times 10^4$ - $15 \times 10^4$.

13. The rubber-reinforced styrene resin composition according to Claim 1, wherein the intrinsic viscosity of the component (3) as measured at 25°C in methyl ethyl ketone is 0.2-0.8 dl/g.

14. The rubber-reinforced styrene resin composition according to Claim 1, wherein the intrinsic viscosity of the component (3) as measured at 25°C in methyl ethyl ketone is 0.2-0.6 dl/g.

15. The rubber-reinforced styrene resin composition according to Claim 1, wherein the aromatic alkenyl compound of each of the monomer components (A), (A') and (A") is at least one member selected from the group consisting of styrene, t-butylstyrene, α-methylstyrene, p-methylstyrene, N,N-diethyl-p-methylstyrene, divinylbenzene, N,N-diethyl-p-aminoethylstyrene, vinylpyridine, vinylxylene, monochlorostyrene, dichlorostyrene, monobromostyrene, fluorostyrene, ethylstyrene and vinylnaphthalene.

16. The rubber-reinforced styrene resin composition according to Claim 1, wherein the aromatic alkenyl compound of each of the monomer components (A), (A') and (A") is at least one member selected from the group consisting of styrene and α-methylstyrene.

17. The rubber-reinforced styrene resin composition according to Claim 1, wherein the alkenyl cyanide compound of each of the monomer components (A), (A') and (A") is at least one member selected from the group consisting of acrylonitrile and methacrylonitrile.

18. The rubber-reinforced styrene resin composition according to Claim 1, wherein the at least one other copolymerizable monomer of each of the monomer components (A), (A') and (A") is selected from the group consisting of acrylic acid esters, methacrylic acid esters, unsaturated dicarboxylic acid anhydrides, unsaturated monocarboxylic acids, maleimide compounds and epoxy compounds.

19. The rubber-reinforced styrene resin composition according to Claim 18, wherein the acrylic acid esters are selected from the group consisting of methyl acrylate, ethyl acrylate, propyl acrylate, butyl acrylate, amyl acrylate, hexyl acrylate, octyl acrylate, 2-ethylhexyl acrylate, cyclohexyl acrylate, dodecyl acrylate, octadecyl acrylate, phenyl acrylate and benzyl acrylate, the methacrylic acid esters are selected from the group consisting of methyl methacrylate, ethyl methacrylate, propyl methacrylate, butyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate and benzyl methacrylate, the unsaturated dicarboxylic acid anhydrides are selected from the group consisting of maleic anhydride, itaconic anhydride and citraconic anhydride, the unsaturated monocarboxylic acids are selected from the group consisting of acrylic acid and methacrylic acid, the maleimide compounds are selected from the group consisting of maleimide, N-methylmaleimide, N-butylmaleimide, N-(p-methylphenyl)maleimide, N-phenylmaleimide and N-cyclohexylmaleimide, and the epoxy compounds are glycidyl methacrylate.

20. The rubber-reinforced styrene resin composition according to Claim 1, wherein the at least one other copolymerizable monomer of the monomer components (A), (A') and (A") is selected from the group consisting of methyl methacrylate and a maleimide compound.

21. The rubber-reinforced styrene resin composition according to Claim 1, wherein the rubbery polymers (I) and (II) are independently at least one member selected from the group consisting of diene rubbery polymers, hydrogenation products of said diene rubbery polymers, ethylene-propylene-(diene) rubbers and acrylic rubbers.

22. The rubber-reinforced styrene resin composition according to Claim 21, wherein the diene rubbery polymers are selected from the group consisting of polybutadiene, polyisoprene, styrene-butadiene random copolymer, acrylonitrile-butadiene copolymer and styrene-butadiene block copolymer.

23. The rubber-reinforced styrene resin composition according to Claim 1, wherein the rubbery polymers (I) and (II) are independently at least one member selected from the group consisting of polybutadiene, styrene-butadiene copolymer, a hydrogenation product of polybutadiene, a hydrogenation product of styrene-butadiene block copolymer and an ethylene-propylene-(diene) rubber.

24. A process for producing a rubber-reinforced styrene resin composition of Claim 1, which comprises compounding:

(1') 5-40% by weight of a graft copolymer obtained by graft-polymerizing, in the presence of 5-80 parts by weight of a rubbery polymer (I), 95-20 parts by weight of a monomer component (A) consisting of (a) 10-95% by weight of at least one aromatic alkenyl compound, (b) 1-60% by weight of at least one alkenyl cyanide compound and (c) 0-89% by weight of at least one other copolymerizable monomer wherein (a) + (b) + (c) = 100% by weight, and (I) + (A) = 100 parts by weight, the grafting degree of the grafted rubbery polymer contained in the graft copolymer being from 3 to 22% by weight,
(2') 5-80% by weight of a graft copolymer obtained by graft-polymerizing, in the presence of 5-80 parts by weight of a rubbery polymer (II), 95-20 parts by weight of a monomer component (A') consisting of (a) 10-95% by weight of at least one aromatic alkenyl compound, (b) 1-60% by weight of at least one alkenyl cyanide compound and (c) 0-89% by weight of at least one other copolymerizable monomer wherein (a') + (b') + (c') = 100% by weight and (II) + (A') = 100 parts by weight, the grafting degree of the grafted rubbery polymer contained in the graft copolymer being 30% by weight or more,
(3') 0-60% by weight of a styrene polymer obtained by copolymerizing a monomer component (A") consisting of (a") 10-95% by weight of at least one aromatic alkenyl compound, (b") 0-60% by weight of at least one alkenyl cyanide compound, (c"-1) 0.5-80% by weight of at least one maleimide compound and (c"-2) 0-80% by weight of at least one other copolymerizable monomer wherein (a") + (b") + (c"-1) + (c"-2) = 100% by weight, and
(4') 0-60% by weight of a styrene polymer obtained by copolymerizing of a monomer component (A"') consisting of (a"') 10-95% by weight of at least one aromatic alkenyl compound, (b"') 1-60% by weight of at least one alkenyl cyanide compound and (c"') 0-89% by weight of at least one other copolymerizable monomer wherein (a) + (b) + (c) = 100% by weight,

wherein (1') + (2') + (3') + (4') = 100% by weight.

25. The process according to Claim 24, wherein the ratio of the component (1')/the component (2')/the component (3') /the component (4') is 7-35/10-70/5-55/0-50% by weight.

26. The process according to Claim 24, wherein the component (1') is a graft copolymer obtained by graft-polymerizing, in the presence of 10-65 parts by weight of a rubbery polymer (I), 90-35 parts by weight of a monomer component (A) consisting of (a) 20-80% by weight of at least one aromatic alkenyl compound, (b) 5-50% by weight of at least one alkenyl cyanide compound and (c) 0-75% by weight of at least one other copolymerizable monomer wherein (a) + (b) + (c) = 100% by weight and (I) + (A) = 100 parts by weight, the grafting degree of the grafted rubbery polymer contained in the graft copolymer being from 3 to 22% by weight; the component (2') is a graft copolymer obtained by graft-polymerizing, in the presence of 10-65 parts by weight of a rubbery polymer (II), 90-35 parts by weight of a monomer component (A') consisting of (a') 20-80% by weight of at least one aromatic alkenyl compound, (b') 5-50% by weight of at least one alkenyl cyanide compound and (c') 0-75% by weight of at least one other copolymerizable monomer wherein (a') + (b') + (c') = 100% by weight and (II) + (A) = 100 parts by weight, the grafting degree of the grafted rubbery polymer contained in the graft copolymer being 30% by weight or more; the component (3') is a styrene polymer obtained by copolymerizing a monomer component (A") consisting of (a") 20-80% by weight of at least one aromatic alkenyl compound, (b") 1-50% by weight of at least one alkenyl cyanide compound, (c"-1) 10-70% by weight of at least one maleimide compound and (c"-2) 0-75% by weight of at least one other copolymerizable monomer wherein (a") + (b") + (c"-1) + (c"-2) = 100% by weight; and the component (4') is a styrene polymer obtained by copolymerizing a monomer component (A''') consisting of (a''') 20-80% by weight of at least one aromatic alkenyl compound, (b''') 5-50% by weight of at least one alkenyl cyanide compound and (c''') 0-75% by weight of at least one other copolymerizable monomer wherein (a''') + (b''') + (c''') = 100% by weight.

27. The process according to Claim 24, wherein the grafting degree in the component (1') is 3-22% by weight and the grafting degree in the component (2') is 35-250% by weight.

28. The process according to Claim 24, wherein the grafting degree in the component (1') is 5-22% by weight and the grafting degree in the component (2') is 40-120% by weight.

29. The process according to Claim 24, wherein the difference between the grafting degree in the component (1') and the grafting degree in the component (2') is more than 5% by weight.

30. The process according to Claim 24, wherein the difference between the grafting degree in the component (1') and the grafting degree in the component (2') is 20% by weight or more.

31. The process according to Claim 24, wherein the aromatic alkenyl compound of each of the monomer components (A) to (A''') is at least one member selected from the group consisting of styrene, t-butylstyrene, $\alpha$-methylstyrene, p-methylstyrene, N,N-diethyl-p-methylstyrene, divinylbenzene, N,N-diethyl-p-aminoethylstyrene, vinylpyridine, vinylxylene, monochlorostyrene, dichlorostyrene, monobromostyrene, fluorostyrene, ethylstyrene and vinylnaphthalene.

32. The process according to Claim 24, wherein the aromatic alkenyl compound of each of the monomer components (A) to (A''') is at least one member selected from the group consisting of styrene and $\alpha$-methylstyrene.

33. The process according to Claim 24, wherein the alkenyl cyanide compound of each of the monomer components (A) to (A''') is at least one member selected from the group consisting of acrylonitrile and methacrylonitrile.

34. The process according to Claim 24, wherein the at least one other copolymerizable monomer of each of the monomer components (A) to (A''') is at least one member selected from the group consisting of acrylic acid esters, methacrylic acid esters, unsaturated dicarboxylic acid anhydrides, unsaturated monocarboxylic acids, maleimide compounds and epoxy compounds.

35. The process according to Claim 34, wherein the acrylic acid esters are selected from the group consisting of methyl acrylate, ethyl acrylate, propyl acrylate, butyl acrylate, amyl acrylate, hexyl acrylate, octyl acrylate, 2-ethylhexyl acrylate, cyclohexyl acrylate, dodecyl acrylate, octadecyl acrylate, phenyl acrylate and benzyl acrylate; the methacrylic acid esters are selected from the group consisting of methyl methacrylate, ethyl methacrylate, propyl methacrylate, butyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate and benzyl methacrylate; the unsaturated dicarboxylic acid anhydrides are selected from the group consisting of maleic anhydride, itaconic anhydride and citraconic anhydride; the unsaturated monocarboxylic acids are selected from the group consisting of acrylic acid and methacrylic acid; the maleimide compounds are selected from the group consisting of maleimide, N-methylmaleimide, N-butylmaleimide, N-(p-methylphenyl)maleimide, N-phenylmaleimide and N-cyclohexylmaleimide; and the epoxy compounds are glycidyl methacrylate.

36. The process according to claim 24, wherein the at least one other copolymerizable monomer of each of the monomer components (A) to (A''') is at least one member selected from the group consisting of methyl methacrylate and a maleimide compound.

37. The process according to Claim 24, wherein the rubbery polymers (I) and (II) are independently at least one member selected from the group consisting of diene rubbery polymers, hydrogenation products of said diene rubbery polymers, ethylene-propylene-(diene) rubbers and acrylic rubbers.

**38.** The process according to Claim 37, wherein the diene rubbery polymers are selected from the group consisting of polybutadiene, polyisoprene, styrene-butadiene random copolymer, acrylonitrile-butadiene copolymer and styrene-butadiene block copolymer.

**39.** The process according to Claim 38, wherein the rubbery polymers (I) and (II) are independently at least one member selected from the group consisting of polybutadiene, styrene-butadiene copolymer, a hydrogenation product of polybutadiene, a hydrogenation product of styrene-butadiene block copolymer and an ethylenepropylene-(diene) rubber.

**40.** Use of the rubber-reinforced styrene resin composition according to any of Claims 1 to 23 in the production of a moulded article, whose surface gloss has been uniformly taken off, and which has good physical property balance in respect of impact resistance, mouldability and heat resistance.

**Patentansprüche**

1.  Kautschukverstärkte Styrolharzzusammensetzung, die im wesentlichen besteht aus

    (1) 2 bis 30 Gew.-% eines gepfropften kautschukartigen Polymers, bei dem 100 Gewichtsteile eines kautschukartigen Polymers (I) mit 3 bis 22 Gewichtsteilen eines Polymers aus einer Monomerkomponente (A) gepfropft sind, die aus (a) 10 bis 95 Gew.-% mindestens einer aromatischen Alkenylverbindung, (b) 1 bis 60 Gew.-% mindestens einer Alkenylcyanidverbindung und (c) 0 bis 89 Gew.-% mindestens eines anderen copolymerisierbaren Monomers besteht, wobei (a) + (b) + (c) = 100 Gew.-% sind,
    (2) 5 bis 40 Gew.-% eines kautschukartigen Polymers, bei dem 100 Gewichtsteile eines kautschukartigen Polymers (II) mit 30 Gewichtsteilen eines oder mehrerer Polymerer einer Monomerkomponente (A') gepfropft sind, die aus (a') 10 bis 95 Gew.-% mindestens einer aromatischen Alkenylverbindung, (b') 1 bis 60 Gew.-% mindestens einer Alkenylcyanidverbindung und (c') 0 bis 89 Gew.-% mindestens eines anderen copolymerisierbaren Monomers besteht, wobei (a') + (b') + (c') = 100 Gew.-% sind, und
    (3) 40 bis 93 Gew.-% eines Styrol-Copolymers einer Monomerkomponente (A"), die aus (a") 10 bis 95 Gew.-% mindestens einer aromatischen Alkenylverbindung, (b") 1 bis 60 Gew.-% mindestens einer Alkenylcyanidverbindung und (c") 0 bis 89 Gew.-% mindestens eines anderen copolymerisierbaren Monomers besteht, wobei (a") + (b") + (c") = 100 Gew.-% sind,

    wobei (1) + (2) + (3) gleich 100 Gew.-% sind.

2.  Kautschukverstärkte Styrolharzzusammensetzung nach Anspruch 1, wobei das Verhältnis Komponente (1)/Komponente (2)/Komponente (3) 3-25/7-35/50-90 Gew.-% beträgt.

3.  Kautschukverstärkte Styrolharzzusammensetzung nach Anspruch 1, wobei das Verhältnis Komponente (1)/Komponente (2)/Komponente (3) 8-21/10-25/50-82 Gew.-% beträgt.

4.  Kautschukverstärkte Styrolharzzusammensetzung nach Anspruch 1, wobei der Pfropfungsgrad der Komponente (1) 3 bis 22 Gew.-% und der Pfropfungsgrad der Komponente (2) 35 bis 250 Gew.-% betragen.

5.  Kautschukverstärkte Styrolharzzusammensetzung nach Anspruch 1, wobei der Pfropfungsgrad der Komponente (1) 5 bis 22 Gew.-% und der Pfropfungsgrad der Komponente (2) 40 bis 120 Gew.-% betragen.

6.  Kautschukverstärkte Styrolharzzusammensetzung nach Anspruch 1, wobei die Differenz zwischen dem Pfropfungsgrad der Komponente (1) und dem Pfropfungsgrad der Komponente (2) mehr als 5 Gew.-% beträgt.

7.  Kautschukverstärkte Styrolharzzusammensetzung nach Anspruch 1, wobei die Differenz zwischen dem Pfropfungsgrad der Komponente (1) und dem Pfropfungsgrad der Komponente (2) mindestens 20 Gew.-% beträgt.

8.  Kautschukverstärkte Styrolharzzusammensetzung nach Anspruch 1, wobei das Verhältnis Komponente (a)/Komponente (b)/Komponente (c) in der Monomerkomponente (A), das Verhältnis Komponente (a')/Komponente (b')/Komponente (c') in der Monomerkomponente (A') und das Verhältnis Komponente (a")/Komponente (b")/Komponente (c") in der Monomerkomponente (A") jeweils 20-90/5-55/0-75 Gew.-% betragen.

9. Kautschukverstärkte Styrolharzzusammensetzung nach Anspruch 1, wobei die Komponente (3) ein Styrol-Copolymer einer Monomerkomponente (A") ist, die aus (a") mindestens einer aromatischen Alkenylverbindung, (b") mindestens einer Alkenylcyanidverbindung, (c"-1) mindestens einer Maleinimidverbindung und (c"-2) mindestens einem anderen copolymerisierbaren Monomer besteht und das Verhältnis Komponente (a")/Komponente (b")/Komponente (c"-1)/Komponente (c"-2) in der Komponente (3) 10-95/1-60/0,5-50/0-88,5 Gew.-% beträgt.

10. Kautschukverstärkte Styrolharzzusammensetzung nach Anspruch 9, wobei das Verhältnis Komponente (a")/Komponente (b")/Komponente (c"-1)/Komponente (c"-2) in der Komponente (3) 20-90/5-55/1-40/0-74,5 Gew.-% beträgt.

11. Kautschukverstärkte Styrolharzzusammensetzung nach Anspruch 1, wobei die Molekulargewichtsverteilung Mw/Mn in der Komponente (3) 1,1-3,2 beträgt.

12. Kautschukverstärkte Styrolharzzusammensetzung nach Anspruch 1, wobei das Gewichtsmittel des Molekulargewichts (auf Polystyrol bezogenes Molekulargewicht Mw) der Komponente (3) $3 \cdot 10^4$ bis $15 \cdot 10^4$ beträgt.

13. Kautschukverstärkte Styrolharzzusammensetzung nach Anspruch 1, wobei die bei 25 °C in Methylethylketon gemessene Grenzviskositätszahl der Komponente (3) 0,2 bis 0,8 dl/g beträgt.

14. Kautschukverstärkte Styrolharzzusammensetzung nach Anspruch 1, wobei die bei 25 °C in Methylethylketon gemessene Grenzviskositätszahl der Komponente (3) 0,2 bis 0,6 dl/g beträgt.

15. Kautschukverstärkte Styrolharzzusammensetzung nach Anspruch 1, wobei die aromatische Alkenylverbindung jeder der Monomerkomponenten (A), (A') und (A") mindestens ein Monomer ist, das ausgewählt ist unter Styrol, t-Butyl-styrol, α-Methylstyrol, p-Methylstyrol, N,N-Diethyl-p-methylstyrol, Divinylbenzol, N,N-Diethyl-p-aminoethylstyrol, Vinylpyridin, Vinylxylol, Monochlorstyrol, Dichlorstyrol, Monobromstyrol, Fluorstyrol, Ethylstyrol und Vinylnaphthalin.

16. Kautschukverstärkte Styrolharzzusammensetzung nach Anspruch 1, wobei die aromatische Alkenylverbindung jeder der Monomerkomponenten (A), (A') und (A") mindestens ein Monomer ist, das unter Styrol und α-Methylstyrol ausgewählt ist.

17. Kautschukverstärkte Styrolharzzusammensetzung nach Anspruch 1, wobei die Alkenylcyanidverbindung jeder der Monomerkomponenten (A), (A') und (A") mindestens ein Monomer ist, das unter Acrylnitril und Methacrylnitril ausgewählt ist.

18. Kautschukverstärkte Styrolharzzusammensetzung nach Anspruch 1, wobei das oder die copolymerisierbaren Monomeren jeder der Monomerkomponenten (A), (A') und (A") unter Acrylsäureestern, Methacrylsäureestern, ungesättigten Dicarbonsäureanhydriden, ungesättigten Monocarbonsäuren, Maleinimidverbindungen und Epoxyverbindungen ausgewählt sind.

19. Kautschukverstärkte Styrolharzzusammensetzung nach Anspruch 18, wobei die Acrylsäureester ausgewählt sind unter Methylacrylat, Ethylacrylat, Propylacrylat, Butylacrylat, Amylacrylat, Hexylacrylat, Octylacrylat, 2-Ethylhexylacrylat, Cyclohexylacrylat, Dodecylacrylat, Octadecylacrylat, Phenylacrylat und Benzylacrylat, die Methacrylsäureester ausgewählt sind unter Methylmethacrylat, Ethylmethacrylat, Propylmethacrylat, Butylmethacrylat, Amylmethacrylat, Hexylmethacrylat, Octylmethacrylat, 2-Ethylhexylmethacrylat, Cyclohexylmethacrylat, Dodecylmethacrylat, Octadecylmethacrylat, Phenylmethacrylat und Benzylmethacrylat, die ungesättigten Dicarbonsäureanhydride ausgewählt sind unter Maleinsäureanhydrid, Itaconsäureanhydrid und Citraconsäureanhydrid; die ungesättigten Monocarbonsäuren ausgewählt sind unter Acrylsäure und Methacrylsäure, die Maleinimidverbindungen ausgewählt sind unter Maleinimid, N-Methylmaleinimid, N-Butylmaleinimid, N-(p-Methylphenyl)-maleinimid, N-Phenylmaleinimid und N-Cyclohexylmaleinimid, und die Epoxyverbindungen Glycidylmethacrylat sind.

20. Kautschukverstärkte Styrolharzzusammensetzung nach Anspruch 1, wobei das oder die copolymerisierbaren Monomeren der Monomerkomponenten (A), (A') und (A") unter Methylmethacrylat und einer Maleinimidverbindung ausgewählt sind.

21. Kautschukverstärkte Styrolharzzusammensetzung nach Anspruch 1, wobei die kautschukartigen Polymeren (I) und (II) unabhängig mindestens ein Polymer darstellen, das ausgewählt ist unter Dienkautschukpolymeren, Hydrierungsprodukten dieser Dienkautschukpolymeren, Ethylen-Propylen-Dien-Kautschuken und Acrylkautschuken.

22. Kautschukverstärkte Styrolharzzusammensetzung nach Anspruch 21, wobei die Dienkautschukpolymeren unter Polybutadien, Polyisopren, statistischen Styrol-Butadien-Copolymeren, Acrylnitril-Butadien-Copolymeren und Styrol-Butadien-Blockcopolymeren ausgewählt sind.

23. Kautschukverstärkte Styrolharzzusammensetzung nach Anspruch 21, wobei die kautschukartigen Polymeren (I) und (II) unabhängig mindestens ein Polymer sind, das ausgewählt ist unter Polybutadien, Styrol-Butadien-Copolymeren, Hydrierungsprodukten von Polybutadien, Hydrierungsprodukten von Styrol-Butadien-Blockcopolymeren und Ethylen-Propylen-Dien-Kautschuken.

24. Verfahren zur Herstellung einer kautschukverstärkten Styrolharzzusammensetzung nach Anspruch 1, bei dem compoundiert werden:

(1') 5 bis 40 Gew.-% eines Pfropfcopolymers, das erhalten ist durch Pfropfpolymerisation von 95 bis 20 Gewichtsteilen einer Monomerkomponente (A), die aus (a) 10 bis 95 Gew.-% mindestens einer aromatischen Alkenylverbindung, (b) 1 bis 60 Gew.-% mindestens einer Alkenylcyanidverbindung und (c) 0 bis 89 Gew.-% mindestens eines anderen copolymerisierbaren Monomers besteht, wobei (a) + (b) + (c) = 100 Gew.-% ist, in Gegenwart von 5 bis 80 Gewichtsteilen eines kautschukartigen Polymers (I), wobei (I) + (A) = 100 Gewichtsteile sind und der Pfropfungsgrad des im Pfropfcopolymer enthaltenen gepfropften kautschukartigen Polymers 3 bis 22 Gew.-% beträgt,
(2') 5 bis 80 Gew.-% eines Pfropfcopolymers, das erhalten ist durch Pfropfpolymerisation von 95 bis 20 Gewichtsteilen einer Monomerkomponente (A'), die aus (a) 10 - 95 Gew.-% mindestens einer aromatischen Alkenylverbindung, (b) 1 bis 60 Gew.-% mindestens einer Alkenylcyanidverbindung und (c) 0 bis 89 Gew.-% mindestens eines anderen copolymerisierbaren Monomers besteht, wobei (a') + (b') + (c') = 100 Gew.-% sind, in Gegenwart von 5 bis 80 Gewichtsteilen eines kautschukartigen Polymers (II), wobei (II) + (A') = 100 Gewichtsteile sind und der Pfropfungsgrad des im Pfropfcopolymer enthaltenen gepfropften kautschukartigen Polymers mindestens 30 Gew.-% beträgt,
(3') 0 bis 60 Gew.-% eines Styrol-Copolymers, das erhalten ist durch Copolymerisation einer Monomerkomponente (A"), die aus (a") 10 bis 95 Gew.-% mindestens einer aromatischen Alkenylverbindung, (b") 0 bis 60 Gew.-% mindestens einer Alkenylcyanidverbindung, (c"-1) 0,5 bis 80 Gew.-% mindestens einer Maleinimidverbindung und (c"-2) 0 bis 80 Gew.-% mindestens eines anderen copolymerisierbaren Monomers besteht, wobei (a") + (b") + (c"-1) + (c"-2) = 100 Gew.-% sind, und
(4') 0 bis 60 Gew.-% eines Styrol-Copolymers, das erhalten ist durch Copolymerisation einer Monomerkomponente (A'''), die aus (a''') 10 bis 95 Gew.-% mindestens einer aromatischen Alkenylverbindung, (b''') 1 bis 60 Gew.-% mindestens einer Alkenylcyanidverbindung und (c''') 0 bis 89 Gew.-% mindestens eines anderen copolymerisierbaren Monomers besteht, wobei (a''') + (b''') + (c''') = 100 Gew.-% sind, und

(1') + (2') + (3') + (4') = 100 Gew.-% sind.

25. Verfahren nach Anspruch 24, wobei das Verhältnis Komponente (1')/Komponente (2')/Komponente (3')/Komponente (4') 7-35/10-70/5-55/0-50 Gew.-% beträgt.

26. Verfahren nach Anspruch 24, wobei die Komponente (1') ein Pfropfcopolymer ist, das erhalten ist durch Pfropfpolymerisation von 90 bis 35 Gew.-% einer Monomerkomponente (A), die aus (a) 20 bis 80 Gew.-% mindestens einer aromatischen Alkenylverbindung, (b) 5 bis 50 Gew.-% mindestens einer Alkenylcyanidverbindung und (c) 0 bis 75 Gew.-% mindestens eines anderen copolymerisierbaren Monomers besteht, wobei (a) + (b) + (c) = 100 Gew.-% sind, in Gegenwart von 10 bis 65 Gewichtsteilen eines kautschukartigen Polymers (I), wobei (I) + (A) = 100 Gew.-% sind und der Pfropfungsgrad des im Pfropfcopolymer enthaltenen kautschukartigen Polymers 3 bis 22 Gew.-% beträgt; die Komponente (2') ein Pfropfcopolymer ist, das erhalten ist durch Pfropfpolymerisation von 90 bis 35 Gew.-% einer Monomerkomponente (A'), die aus (a') 20 bis 80 Gew.-% mindestens einer aromatischen Alkenylverbindung, (b') 5 bis 50 Gew.-% mindestens einer Alkenylcyanidverbindung und (c') 0 bis 75 Gew.-% mindestens eines anderen copolymerisierbaren Monomers besteht, wobei (a') + (b') + (c') = 100 Gew.-% sind, in Gegenwart von 10 bis 65 Gewichtsteilen eines kautschukartigen Polymers (II), wobei (II) + (A) = 100 Gewichtsteile sind und der Pfropfungsgrad des im Pfropfcopolymer enthaltenen gepfropften kautschukartigen Polymers mindestens 30 Gew.-% beträgt; die Komponente (3') ein Styrol-Copolymer ist, das erhalten ist durch Copolymerisation einer Monomerkomponente (A"), die aus (a") 20 bis 80 Gew.-% mindestens einer aromatischen Alkenylverbindung, (b") 1 bis 50 Gew.-% mindestens einer Alkenylcyanidverbindung, (c"-1) 10 bis 70 Gew.-% mindestens einer Maleinimidverbindung und (c"-2) 0 bis 75 Gew.-% mindestens eines anderen copolymerisierbaren Monomers besteht, wobei (a") + (b") + (c"-1) + (c"-2) = 100 Gew.-% sind, und die Komponente (4') ein Styrol-Copolymer ist, das erhalten ist durch Copolymerisation einer Monomerkomponente (A'''), die aus (a''') 20 bis 80 Gew.-% mindestens einer aromatischen Alkenylverbindung, (b''') 5 bis 50 Gew.-% mindestens einer Alkenylcyanidverbindung und (c''') 0 bis 75 Gew.-% mindestens eines anderen copolymerisierbaren Monomers besteht, wobei (a''') + (b''') + (c''') = 100 Gew.-% sind.

27. Verfahren nach Anspruch 24, wobei der Pfropfungsgrad der Komponente (1') 3 bis 22 Gew.-% und der Pfropfungsgrad der Komponente (2') 35 bis 250 Gew.-% betragen.

28. Verfahren nach Anspruch 24, wobei der Pfropfungsgrad der Komponente (1') 5 bis 22 Gew.-% und der Pfropfungsgrad der Komponente (2') 40 bis 120 Gew.-% betragen.

29. Verfahren nach Anspruch 24, wobei die Differenz zwischen dem Pfropfungsgrad der Komponente (1') und dem Pfropfungsgrad der Komponente (2') mehr als 5 Gew.-% beträgt.

30. Verfahren nach Anspruch 24, wobei die Differenz zwischen dem Pfropfungsgrad der Komponente (1') und dem Pfropfungsgrad der Komponente (2') mindestens 20 Gew.-% beträgt.

31. Verfahren nach Anspruch 24, wobei die aromatische Alkenylverbindung jeder der Monomerkomponenten (A) bis (A''') mindestens ein Monomer ist, das ausgewählt ist unter Styrol, t-Butylstyrol, α-Methylstyrol, p-Methylstyrol, N,N-Diethyl-p-methylstyrol, Divinylbenzol, N,N-Diethyl-p-aminoethylstyrol, Vinylpyridin, Vinylxylol, Monochlorstyrol, Dichlorstyrol, Monobromstyrol, Fluorstyrol, Ethylstyrol und Vinylnaphthalin.

32. Verfahren nach Anspruch 24, wobei die aromatische Alkenylverbindung jeder der Monomerkomponenten (A) bis (A''') mindestens ein Monomer ist, das unter Styrol und α-Methylstyrol ausgewählt ist.

33. Verfahren nach Anspruch 24, wobei die Alkenylcyanidverbindung jeder der Monomerkomponenten (A) bis (A''') mindestens ein Monomer ist, das unter Acrylnitril und Methacrylnitril ausgewählt ist.

34. Verfahren nach Anspruch 24, wobei das oder die anderen copolymerisierbaren Monomeren jeder der Monomerkomponenten (A) bis (A''') mindestens ein Monomer sind, das unter Acrylsäureestern, Methacrylsäureestern, ungesättigten Dicarbonsäureanhydriden, ungesättigten Monocarbonsäuren, Maleinimidverbindungen und Epoxyverbindungen ausgewählt ist.

35. Verfahren nach Anspruch 24, wobei die Acrylsäureester ausgewählt sind unter Methylacrylat, Ethylacrylat, Propylacrylat, Butylacrylat, Amylacrylat, Hexylacrylat, Octylacrylat, 2-Ethylhexylacrylat, Cyclohexylacrylat, Dodecylacrylat, Octadecylacrylat, Phenylacrylat und Benzylacrylat; die Methacrylsäureester ausgewählt sind unter Methylmethacrylat, Ethylmethacrylat, Propylmethacrylat, Butylmethacrylat, Amylmethacrylat, Hexylmethacrylat, Octylmethacrylat, 2-Ethylhexylmethacrylat, Cyclohexylmethacrylat, Dodecylmethacrylat, Octadecylmethacrylat, Phenylmethacrylat und Benzylmethacrylat; unter Maleinsäureanhydrid, Itaconsäureanhydrid und Citraconsäureanhydrid; die ungesättigten Monocarbonsäuren ausgewählt sind unter Acrylsäure und Methacrylsäure; die Maleinimidverbindungen ausgewählt sind unter Maleinimid, N-Methylmaleinimid, N-Butylmaleinimid, N-(p-Methylphenyl)-maleinimid, N-Phenylmaleinimid und N-Cyclohexylmaleinimid, und die Epoxyverbindungen Glycidylmethacrylat sind.

36. Verfahren nach Anspruch 24, wobei das oder die anderen copolymerisierbaren Monomeren jeder der Monomerkomponenten (A) bis (A''') mindestens ein Monomer sind, das unter Methylmethacrylat und einer Maleinimidverbindung ausgewählt ist.

37. Verfahren nach Anspruch 24, wobei die kautschukartigen Polymeren (I) und (II) unabhängig mindestens ein Polymer sind, das ausgewählt ist unter Dienkautschukpolymeren, Hydrierungsprodukten dieser Dienkautschukpolymeren, Ethylen-Propylen-Dien-Kautschuken und Acrylkautschuken.

38. Verfahren nach Anspruch 37, wobei die Dienkautschukpolymeren ausgewählt sind unter Polybutadien, Polyisopren, statistischen Styrol-Butadien-Copolymeren, Acrylnitril-Butadien-Copolymeren und Styrol-Butadien-Blockcopolymeren.

**39.** Verfahren nach Anspruch 38, wobei die kautschukartigen Polymeren (I) und (II) unabhängig mindestens ein Polymer darstellen, das ausgewählt ist unter Polybutadien, Styrol-Butadien-Copolymeren, Hydrierungsprodukten von Polybutadienen, Hydrierungsprodukten von Styrol-Butadien-Blockcopolymeren und Ethylen-Propylen-Dien-Kautschuken.

**40.** Verwendung der kautschukverstärkten Styrolharzzusammensetzung nach einem der Ansprüche 1 bis 23 bei der Herstellung von Formkörpern, deren Oberflächenglanz gleichmäßig zum Verschwinden gebracht wurde und die hinsichtlich der Schlagfestigkeit, der Formbarkeit und der Hitzefestigkeit gut ausgeglichene physikalische Eigenschaften aufweisen.

**Revendications**

**1.** Composition de résine de styrène renforcée par du caoutchouc, essentiellement constituée par:

(1) 2 à 30% en poids d'un polymère caoutchouteux greffé dans lequel 100 parties en poids d'un polymère caoutchouteux (I) sont greffées avec de 3 à 22 parties en poids d'un polymère d'un constituant monomère (A) constitué par (a) 10 à 95% en poids d'au moins un composé alcényle aromatique, (b) 1 à 60% en poids d'au moins un composé cyanure d'alcényle et (c) 0 à 89% en poids d'au moins un autre monomère copolymérisable, dans lequel (a) + (b) + (c) = 100% en poids,
(2) 5 à 40% en poids d'un polymère caoutchouteux greffé dans lequel 100 parties en poids d'un polymère caoutchouteux (II) sont greffées avec 30 parties en poids ou plus d'un polymère d'un constituant monomère (A') constitué par (a') 10 à 95% en poids d'au moins un composé alcényle aromatique, (b') 1 à 60% en poids d'au moins un composé cyanure d'alcényle et (c') 0 à 89% en poids d'au moins un autre monomère copolymérisable, dans lequel (a') + (b') + (c') = 100% en poids, et
(3) 40 à 93% en poids d'un copolymère de styrène d'un constituant monomère (A") constitué par (a") 10 à 95% en poids d'au moins un composé alcényle aromatique, (b") 1 à 60% en poids d'au moins un composé cyanure d'alcényle et (c") 0 à 89% en poids d'au moins un autre monomère copolymérisable, dans lequel (a") + (b") + (c") = 100% en poids,

dans laquelle (1) + (2) + (3) = 100% en poids.

**2.** Composition de résine de styrène renforcée par du caoutchouc selon la revendication 1, dans laquelle le rapport constituant (1)/constituant (2)/constituant (3) est de 3 à 25/7 à 35/50 à 90% en poids.

**3.** Composition de résine de styrène renforcée par du caoutchouc selon la revendication 1, dans laquelle le rapport constituant (1)/constituant (2)/constituant (3) est 8 à 21/10 à 25/50 à 82% en poids.

**4.** Composition de résine de styrène renforcée par du caoutchouc selon la revendication 1, dans laquelle le degré de greffage du constituant (1) est de 3 à 22% en poids et le degré de greffage du constituant (2) est de 35 à 250% en poids.

**5.** Composition de résine de styrène renforcée par du caoutchouc selon la revendication 1, dans laquelle le degré de greffage du constituant (1) est de 5 à 22% en poids et le degré de greffage du constituant (2) est de 40 à 120% en poids.

**6.** Composition de résine de styrène renforcée par du caoutchouc selon la revendication 1, dans laquelle la différence entre le degré de greffage du constituant (1) et le degré de greffage du constituant (2) est supérieure à 5% en poids.

**7.** Composition de résine de styrène renforcée par du caoutchouc selon la revendication 1, dans laquelle la différence entre le degré de greffage du constituant (1) et le degré de greffage du constituant (2) est de 20% en poids ou plus.

**8.** Composition de résine de styrène renforcée par du caoutchouc selon la revendication 1, dans laquelle le rapport constituant (a)/constituant (b)/constituant (c) dans le constituant monomère (A), le rapport constituant (a')/constituant (b')/constituant (c') dans le constituant monomère (A') et le rapport constituant (a")/constituant (b")/constituant (c") dans le constituant monomère (A") sont chacun 20 à 90/5 à 55/0 à 75% en poids.

**9.** Composition de résine de styrène renforcée par du caoutchouc selon la revendication 1, dans laquelle le constituant (3) est un copolymère de styrène d'un constituant monomère (A") constitué par (a") au moins un composé alcényle aromatique, (b") au moins un composé cyanure d'alcényle, (c"-1) au moins un composé maléimide et (c"-2) au moins un autre monomère copolymérisable, et le rapport constituant (a")/constituant (b")/constituant (c"-1)/constituant (c"-2) dans le constituant (3) est 10 à 95/1 à 60/0,5 à 50/0 à 88,5% en poids.

10. Composition de résine de styrène renforcée par du caoutchouc selon la revendication 9, dans laquelle le rapport constituant (a")/constituant (b")/constituant (c"-1)/constituant (c"-2) dans le constituant (3) est 20 à 90/5 à 55/1 à 40/0 à 74,5% en poids.

11. Composition de résine de styrène renforcée par du caoutchouc selon la revendication 1, dans laquelle la distribution de poids moléculaire Mw/Mn (poids moléculaire moyen en poids/poids moléculaire moyen en nombre) du constituant (3) est de 1,1 à 3,2.

12. Composition de résine de styrène renforcée par du caoutchouc selon la revendication 1, dans laquelle le poids moléculaire moyen en poids (Mw déterminé par rapport au polystyrène) du constituant (3) est de $3 \times 10^4$ à $15 \times 10^4$.

13. Composition de résine de styrène renforcée par du caoutchouc selon la revendication 1, dans laquelle la viscosité intrinsèque du constituant (3) telle que mesurée à 25°C dans de la méthyléthylcétone est de 0,2 à 0,8 dl/g.

14. Composition de résine de styrène renforcée par du caoutchouc selon la revendication 1, dans laquelle la viscosité intrinsèque du constituant (3) telle que mesurée à 25°C dans de la méthyléthylcétone est de 0,2 à 0,6 dl/g.

15. Composition de résine de styrène renforcée par du caoutchouc selon la revendication 1, dans laquelle le composé alcényle aromatique de chacun des constituants monomères (A), (A') et (A") est au moins un élément choisi dans le groupe constitué par le styrène, le t-butylstyrène, le α-méthylstyrène, le p-méthylstyrène, le N,N-diéthyl-p-méthylstyrène, le divinylbenzène, le N,N-diéthyl-p-aminoéthylstyrène, la vinylpyridine, le vinylxylène, le monochlorostyrène, le dichlorostyrène, le monobromostyrène, le fluorostyrène, l'éthylstyrène et le vinylnaphtalène.

16. Composition de résine de styrène renforcée par du caoutchouc selon la revendication 1, dans laquelle le composé alcényle aromatique de chacun des constituants monomères (A), (A') et (A") est au moins un élément choisi dans le groupe constitué par le styrène et le α-méthylstyrène.

17. Composition de résine de styrène renforcée par du caoutchouc selon la revendication 1, dans laquelle le composé cyanure d'alcényle de chacun des constituants monomères (A), (A') et (A") est au moins un élément choisi dans le groupe constitué par l'acrylonitrile et le méthacrylonitrile.

18. Composition de résine de styrène renforcée par du caoutchouc selon la revendication 1, dans laquelle ledit au moins un autre monomère copolymérisable de chacun des constituants monomères (A), (A') et (A") est choisi dans le groupe constitué par les esters de l'acide acrylique, les esters de l'acide méthacrylique, les anhydrides d'acide dicarboxylique insaturé, les acides monocarboxyliques insaturés, les composés maléimides et les composés époxy.

19. Composition de résine de styrène renforcée par du caoutchouc selon la revendication 18, dans laquelle les esters de l'acide acrylique sont choisis dans le groupe constitué par l'acrylate de méthyle, l'acrylate d'éthyle, l'acrylate de propyle, l'acrylate de butyle, l'acrylate d'amyle, l'acrylate d'hexyle, l'acrylate d'octyle, l'acrylate de 2-éthylhexyle, l'acrylate de cyclohexyle, l'acrylate de dodécyle, l'acrylate d'octadécyle, l'acrylate de phényle et l'acrylate de benzyle, les esters de l'acide méthacrylique sont choisis dans le groupe constitué par le méthacrylate de méthyle, le méthacrylate d'éthyle, le méthacrylate de propyle, le méthacrylate de butyle, le méthacrylate d'amyle, le méthacrylate d'hexyle, le méthacrylate d'octyle, le méthacrylate de 2-éthylhexyle, le méthacrylate de cyclohexyle, le méthacrylate de dodécyle, le méthacrylate d'octadécyle, le méthacrylate de phényle et le méthacrylate de benzyle, les anhydrides d'acide dicarboxylique insaturé sont choisis dans le groupe constitué par l'anhydride maléique, l'anhydride itaconique et l'anhydride citraconique, les acides monocarboxyliques insaturés sont choisis dans le groupe constitué par l'acide acrylique et l'acide méthacrylique, les composés maléimides sont choisis dans le groupe constitué par le maléimide, le N-méthylmaléimide, le N-butylmaléimide, le N-(p-méthylphényl)maléimide, le X-phénylmaléimide et le N-cyclohexylmaléimide, et les composés époxy sont le méthacrylate de glycidyle.

20. Composition de résine de styrène renforcée par du caoutchouc selon la revendication 1, dans laquelle ledit au moins un autre monomère copolymérisable des constituants monomères (A), (A') et (A") est choisi dans le groupe constitué par le méthacrylate de méthyle et un composé maléimide.

21. Composition de résine de styrène renforcée par du caoutchouc selon la revendication 1, dans laquelle les polymères caoutchouteux (I) et (II) sont indépendamment au moins un élément choisi dans le groupe constitué par les polymères caoutchouteux diéniques, les produits d'hydrogénation desdits polymères caoutchouteux diéniques, les caoutchoucs éthylène-propylène-(diène) et les caoutchoucs acryliques.

22. Composition de résine de styrène renforcée par du caoutchouc selon la revendication 21, dans laquelle les polymères caoutchouteux diéniques sont choisis dans le groupe constitué par un polybutadiène, un polyisoprène, un copolymère styrène-butadiène statistique, un copolymère acrylonitrile-butadiène et un copolymère styrène-butadiène séquencé.

23. Composition de résine de styrène renforcée par du caoutchouc selon la revendication 1, dans laquelle les polymères caoutchouteux (I) et (II) sont indépendamment au moins un élément choisi dans le groupe constitué par un polybutadiène, un copolymère styrène-butadiène un produit d'hydrogénation de polybutadiène, un produit d'hydrogénation de copolymère styrène-butadiène séquencé et un caoutchouc éthylène-propylène-(diène).

24. Procédé pour produire une composition de résine de styrène renforcée par du caoutchouc selon la revendication 1, qui consiste à mélanger:

(1') 5 à 40% en poids d'un copolymère greffé obtenu en polymérisant par greffage, en présence de 5 à 80 parties en poids d'un polymère caoutchouteux (I), 95 à 20 parties en poids d'un constituant monomère (A) constitué par (a) 10 à 95% en poids d'au moins un composé alcényle aromatique, (b) 1 à 60% en poids d'au moins un composé cyanure d'alcényle et (c) 0 à 89% en poids d'au moins un autre monomère copolymérisable, dans lequel (a) + (b) + (c) = 100% en poids, et (I) + (A) = 100 parties en poids, le degré de greffage du polymère caoutchouteux greffé contenu dans le copolymère greffé étant de 3 à 22% en poids,

(2') 5 à 80% en poids d'un copolymère greffé obtenu en polymérisant par greffage, en présence de 5 à 80 parties en poids d'un polymère caoutchouteux (II), 95 à 20 parties en poids d'un constituant monomère (A') constitué par (a) 10 à 95% en poids d'au moins un composé alcényle aromatique, (b) 1 à 60% en poids d'au moins un composé cyanure d'alcényle et (c) 0 à 89% en poids d'au moins un autre monomère copolymérisable, dans lequel (a') + (b') + (c') = 100% en poids, et (II) + (A') = 100 parties en poids, le degré de greffage du polymère caoutchouteux greffé contenu dans le copolymère greffé étant de 30% en poids ou plus,

(3') 0 à 60% en poids d'un polymère de styrène obtenu en copolymérisant un constituant monomère (A") constitué par (a") 10 à 95% en poids d'au moins un composé alcényle aromatique, (b") 0 à 60% en poids d'au moins un composé cyanure d'alcényle, (c"-1) 0,5 à 80% en poids d'au moins un composé maléimide et (c"-2) 0 à 80% en poids d'au moins un autre monomère copolymérisable, dans lequel (a") + (b") + (c"-1) + (c"-2) = 100% en poids, et

(4') 0 à 60% en poids d'un polymère de styrène obtenu en copolymérisant un constituant monomère (A"') constitué par (a"') 10 à 95% en poids d'au moins un composé alcényle aromatique, (b"') 1 à 60% en poids d'au moins un composé cyanure d'alcényle et (c"') 0 à 89% en poids d'au moins un autre monomère copolymérisable, dans lequel (a) + (b) + (c) = 100% en poids,

dans laquelle (1') + (2') + (3') + (4') = 100% en poids.

25. Procédé selon la revendication 24, dans lequel le rapport constituant (1')/constituant (2')/constituant (3')/constituant (4') est 7 à 35/10 à 70/5 à 55/0 à 50% en poids.

26. Procédé selon la revendication 24, dans lequel le constituant (1') est un copolymère greffé obtenu en polymérisant par greffage, en présence de 10 à 65 parties en poids d'un polymère caoutchouteux (I), 90 à 35 parties en poids d'un constituant monomère (A) constitué par (a) 20 à 80% en poids d'au moins un composé alcényle aromatique, (b) 5 à 50% en poids d'au moins un composé cyanure d'alcényle et (c) 0 à 75% en poids d'au moins un autre monomère copolymérisable, dans lequel (a) + (b) + (c) = 100% en poids, et (I) + (A) = 100 parties en poids, le degré de greffage du polymère caoutchouteux greffé contenu dans le copolymère greffé étant de 3 à 22% en poids; le constituant (2') est un copolymère greffé obtenu en polymérisant par greffage, en présence de 10 à 65 parties en poids d'un polymère caoutchouteux (II), 90 à 35 parties en poids d'un constituant monomère (A') constitué par (a') 20 à 80% en poids d'au moins un composé alcényle aromatique, (b') 5 à 50% en poids d'au moins un composé cyanure d'alcényle et (c') 0 à 75% en poids d'au moins un autre monomère copolymérisable, dans lequel (a') + (b') + (c') = 100% en poids, et (II) + (A) = 100 parties en poids, le degré de greffage du polymère caoutchouteux greffé contenu dans le copolymère greffé étant de 30% en poids ou plus; le constituant (3') est un polymère de styrène obtenu en copolymérisant un constituant monomère (A") constitué par (a") 20 à 80% en poids d'au moins un composé alcényle aromatique, (b") 1 à 50% en poids d'au moins un composé cyanure d'alcényle, (c"-1) 10 à 70% en poids d'au moins un composé maléimide et (c"-2) 0 à 75% en poids d'au moins un autre monomère copolymérisable, dans lequel (a") + (b") + (c"-1) + (c"-2) = 100% en poids; le constituant (4') est un polymère de styrène obtenu en copolymérisant un constituant monomère (A'") constitué par (a'") 20 à 80% en poids d'au moins un composé alcényle aromatique, (b'") 5 à 50% en poids d'au moins un composé cyanure d'alcényle et (c'") 0 à 75% en poids d'au moins un autre monomère copolymérisable, dans lequel (a'") + (b'") + (c'") = 100% en poids.

27. Procédé selon la revendication 24, dans lequel le degré de greffage dans le constituant (1') est de 3 à 22% en poids et le degré de greffage dans le constituant (2') est de 35 à 250% en poids.

28. Procédé selon la revendication 24, dans lequel le degré de greffage dans le constituant (1') est de 5 à 22% en poids et le degré de greffage dans le constituant (2') est de 40 à 120% en poids.

29. Procédé selon la revendication 24, dans lequel la différence entre le degré de greffage dans le constituant (1') et le degré de greffage dans le constituant (2') est supérieure à 5% en poids.

30. Procédé selon la revendication 24, dans lequel la différence entre le degré de greffage dans le constituant (1') et le degré de greffage dans le constituant (2') est de 20% en poids ou plus.

31. Procédé selon la revendication 24, dans lequel le composé alcényle aromatique de chacun des constituants monomères (A) à (A'") est au moins un élément choisi dans le groupe constitué par le styrène, le t-butylstyrène, le α-méthylstyrène, le p-méthylstyrène, le N,N-diéthyl-p-méthylstyrène, le divinylbenzène, le N,N-diéthyl-p-aminoé-thylstyrène, la vinylpyridine, le vinylxylène, le monochlorostyrène, le dichlorostyrène, le monobromostyrène, le fluorostyrène, l'éthylstyrène et le vinylnaphtalène.

32. Procédé selon la revendication 24, dans lequel le composé alcényle aromatique de chacun des constituants monomères (A) à (A'") est au moins un élément choisi dans le groupe constitué par le styrène et le α-méthylstyrène.

33. Procédé selon la revendication 24, dans lequel le composé cyanure d'alcényle de chacun des constituants monomères (A) à (A'") est au moins un élément choisi dans le groupe constitué par l'acrylonitrile et le méthacrylonitrile.

34. Procédé selon la revendication 24, dans lequel ledit au moins un autre monomère copolymérisable de chacun des constituants monomères (A) à (A'") est au moins un élément choisi dans le groupe constitué par les esters de l'acide acrylique, les esters de l'acide méthacrylique, les anhydrides d'acide dicarboxylique insaturé, les acides monocarboxyliques insaturés, les composés maléimides et les composés époxy.

35. Procédé selon la revendication 34, dans lequel les esters de l'acide acrylique sont choisis dans le groupe constitué par l'acrylate de méthyle, l'acrylate d'éthyle, l'acrylate de propyle, l'acrylate de butyle, l'acrylate d'amyle, l'acrylate d'hexyle, l'acrylate d'octyle, l'acrylate de 2-éthylhexyle, l'acrylate de cyclohexyle, l'acrylate de dodécyle, l'acrylate d'octadécyle, l'acrylate de phényle et l'acrylate de benzyle; les esters de l'acide méthacrylique sont choisis dans le groupe constitué par le méthacrylate de méthyle, le méthacrylate d'éthyle, le méthacrylate de propyle, le méthacrylate de butyle, le méthacrylate d'amyle, le méthacrylate d'hexyle, le méthacrylate d'octyle, le méthacrylate de 2-éthylhexyle, le méthacrylate de cyclohexyle, le méthacrylate de dodécyle, le méthacrylate d'octadécyle, le méthacrylate de phényle et le méthacrylate de benzyle; les anhydrides d'acide dicarboxylique insaturé sont choisis dans le groupe constitué par l'anhydride maléique, l'anhydride itaconique et l'anhydride citraconique; les acides monocarboxyliques insaturés sont choisis dans le groupe constitué par l'acide acrylique et l'acide méthacrylique; les composés maléimides sont choisis dans le groupe constitué par le maléimide, le N-méthylmaléimide, le N-butylmaléimide, le N-(p-méthylphényl)maléimide, le N-phénylmaléimide et le N-cyclohexylmaléimide; et les composés époxy sont le méthacrylate de glycidyle.

36. Procédé selon la revendication 24, dans lequel ledit au moins un autre monomère copolymérisable de chacun des constituants monomères (A) à (A'") est au moins un élément choisi dans le groupe constitué par le méthacrylate de méthyle et un composé maléimide.

37. Procédé selon la revendication 24, dans lequel les polymères caoutchouteux (I) et (II) sont indépendamment au moins un élément choisi dans le groupe constitué par les polymères caoutchouteux diéniques, les produits d'hydrogénation desdits polymères caoutchouteux diéniques, les caoutchoucs éthylène-propylène-(diène) et les caoutchoucs acryliques.

38. Procédé selon la revendication 37, dans lequel les polymères caoutchouteux diéniques sont choisis dans le groupe constitué par un polybutadiène, un polyisoprène, un copolymère styrène-butadiène statistique, un copolymère acrylonitrile-butadiène et un copolymère styrène-butadiène séquencé.

39. Procédé selon la revendication 38, dans lequel les polymères caoutchouteux (I) et (II) sont indépendamment au moins un élément choisi dans le groupe constitué par un polybutadiène, un copolymère styrène-butadiène un produit d'hydrogénation de polybutadiène, un produit d'hydrogénation de copolymère styrène-butadiène séquencé et un caoutchouc éthylène-propylène-(diène).

40. Utilisation d'une composition de résine de styrène renforcée par du caoutchouc selon l'une quelconque des revendications 1 à 23 dans la production d'un article moulé, dont le brillant de surface a été uniformément retiré, et qui a un bon équilibre de propriétés physiques pour ce qui est de la résistance au choc, de l'aptitude au moulage et de la résistance à la chaleur.